**Europäisches Patentamt**

**European Patent Office**

**Office européen des brevets**

(19)

(11) Veröffentlichungsnummer: **0 023 530**
**B1**

(12) **EUROPÄISCHE PATENTSCHRIFT**

(45) Veröffentlichungstag der Patentschrift:
**14.03.84**

(51) Int. Cl.³: **G 21 C 19/46,** G 21 F 9/04

(21) Anmeldenummer: **80100787.3**

(22) Anmeldetag: **16.02.80**

(54) **Verfahren zur Reinigung der bei der Wiederaufbereitung von bestrahlten Kernbrennstoffen nach dem Purex-Prozess vorhandenen Produktlösungen von Tritium.**

(30) Priorität: **19.07.79 DE 2929167**

(43) Veröffentlichungstag der Anmeldung:
**11.02.81 Patentblatt 81/6**

(45) Bekanntmachung des Hinweises auf die Patenterteilung:
**14.03.84 Patentblatt 84/11**

(84) Benannte Vertragsstaaten:
**BE DE FR GB IT NL**

(56) Entgegenhaltungen:
**DE - A - 1 484 844**
**DE - B - 2 423 793**

(73) Patentinhaber: **Uhde GmbH,**
**Friedrich-Uhde-Strasse 15 Postfach 262,**
**D-4600 Dortmund 1 (DE)**

(72) Erfinder: **Olinger, Rainer, Dr. Ing. Dipl.-Phys.,**
**Kaiserstrasse 54, D-5800 Hagen 5 (DE)**
Erfinder: **van den Bossche, André, Dipl.-Ing., Unnaer**
**Strasse 9, D-4760 Werl (DE)**

(74) Vertreter: **Patentanwälte Meinke und Dabringhaus**
**Dipl.-Ing. J. Meinke Dipl.-Ing. W. Dabringhaus,**
**Westenhellweg 67, D-4600 Dortmund 1 (DE)**

# Verfahren zur Reinigung der bei der Wiederaufbereitung von bestrahlten Kernbrennstoffen nach dem Purex-Prozeß vorhandenen Produktlösungen von Tritium

Die Erfindung betrifft ein Verfahren zur Reinigung der bei der Wiederaufbereitung von bestrahlten Kernbrennstoffen nach dem Purex-Prozeß vorhandenen Produktlösungen von Tritium (T bzw. $H_3$) mit einer Mehrzahl von in Reihe geschalteten Extraktionszyklen zur Extraktion des Urans und/oder Plutoniums mit einem organischen Lösungsmittel.

Aus der DE-AS 2 423 793 ist ein Verfahren der Gattung bekannt, bei dem an einer Stelle des Prozesses im ersten Extraktionszyklus eine spezielle zusätzliche Waschstufe vorgesehen ist, durch die die Hauptmenge des Tritiums auf ein möglichst geringes Wasservolumen begrenzt werden soll. Teilmengen des Tritiums werden bei dem bekannten Verfahren nicht sonderlich berücksichtigt und an die Umwelt abgegeben.

Der Purex-Prozeß ist z. B. von E. R. Irish und W. H. Reas in einer Veröffentlichung der United States Atomic Energy Commission beschrieben, im Bericht über »Symposium on the Reprocessing of Irradiated Fuels«, May, 20—25, 1957, Seiten 82 ff.

Nach den strengen Bestimmungen der Strahlenschutzverordnung (StrSchV Bundesgesetzblatt, Teil I, 1976, Nr. 125) sind die Ergebnisse nach dem bekannten Verfahren nicht befriedigend. Die Belastung der Umwelt kann bei dem bekannten Verfahren noch unzulässig hoch sein. Hinzu kommt, daß die Funktion des gesamten Verfahrens vom Wirkungsgrad und der Funktionsfähigkeit eines einzigen Anlageteiles, nämlich einer zusätzlich vorgesehenen Waschanlage, abhängt.

Aufgabe der Erfindung ist die Schaffung einer Lösung, mit welcher mit einfachem apparativen und wirtschaftlich vertretbarem Aufwand die in einem Gesamtprozeß anfallenden Wässer klassifiziert und so gereinigt werden, daß sie den Bestimmungen der StrSchV entsprechen, wobei gleichzeitig die Menge des einer Endlagerung zuzuführenden tritiumhaltigen Abwassers möglichst gering ist.

Diese Aufgabe wird gemäß der Erfindung dadurch gelöst, daß zur Extraktion des Tritiums eine Mehrzahl von in Reihe geschalteten Zwischenreinigungszyklen der wäßrigen Phase vorgesehen sind, wobei die aus einem Zwischenreinigungszyklus abgegebene Menge an Tritium in die nächsthöher verunreinigte Stufe der Reihe von Zwischenreinigungszyklen eingeschleust wird.

Mit der Erfindung wird in besonders günstiger Weise durch Schaffung besonderer Kreisläufe für die wäßrige Phase ein hoher Reinigungseffekt erzielt, da die Vervielfachung des Reinigungseffektes nach dem bekannten Purex-Prozeß auch für die Verunreinigung Tritium erreichbar ist. Dabei wird insbesondere die Konzentration der ständig neu anfallenden Tritiummengen in den einzelnen Kreisläufen nicht möglichst hoch angesetzt, sondern durch große Abgaben von Wasser und Salpetersäure diese Tritiumkonzentration in jedem Kreislauf auf einem vertretbar niedrigen Niveau gehalten.

In Ausgestaltung sieht die Erfindung vor, daß jeweils einem Extraktionszyklus ein Zwischenreinigungszyklus der wäßrigen Phase nachgeordnet ist, was ggf. zur Typisierung der Anlageteile führen kann und damit zur Wirtschaftlichkeit des Verfahrens beiträgt, indem eine Mehrzahl von gleichen Baugruppen hintereinander und/oder angeordnet werden kann.

Nach der Erfindung kann auch vorgesehen sein, daß die Zwischenreinigungszyklenfolge nach der Pu/U-Trennung getrennt für jedes Produkt erfolgt, was wiederum den apparativen Aufwand verringern kann, nachdem die Trennmöglichkeit der einzelnen Produktstoffe und damit auch deren Reinigungsfähigkeit unterschiedlich ist, so daß der apparativ aufwendigere Teil mit geringeren Volumina und damit wirtschaftlicher gefahren werden kann. Dies schließt jedoch nicht aus, daß die Gesamtzyklenfolge auch vor der Pu/U-Trennung erfolgen kann, wenn dies in einem wirtschaftlich vertretbaren Rahmen durchführbar ist.

Nach der Erfindung kann es auch zweckmäßig sein, daß die Zwischenreinigungszyklen der wäßrigen Phase teilweise zusammengefaßt werden. Dies ist insbesondere dann günstig, wenn sich mit einer vergleichsweise geringen Zahl von Reinigungszyklen bereits die geforderte Reinigungswirkung erreichen läßt.

Dem Zweck, die Tritiummengen in jedem Kreislauf möglichst auf einem geringen Niveau zu halten, dient eine Ausgestaltung der Erfindung damit, daß vorbestimmte Mengen Tritium aus jedem Zwischenreinigungszyklus entnommen werden.

Zur Vereinfachung der Verfahrenssteuerung und des Verfahrensablaufes kann nach der Erfindung auch vorgesehen sein, daß zusätzlich jedem Zwischenreinigungszyklus geringfügige Mengen an frischer Salpetersäure und/oder Wasser zum Ausgleich der Mengenbilanzen zugeführt werden. Diese zusätzlichen Mengen sind noch nicht mit Tritium verseucht und belasten daher den Prozeß nicht.

In weiterer, vorteilhafter Ausgestaltung ist vorgesehen, daß der Raffinatstrom der Plutonium-Extraktionsstufe, die der Uran/Plutonium-Trennstufe folgt, direkt als letzter Waschstrom in die Uran/Plutonium-Extraktionsstufe zurückgeführt wird. Mit dieser Verfahrensvariante lassen sich besonders einfache Prozeßführungen erreichen.

Um den Reinigungseffekt von Zwischenreinigungszyklen zusätzlich noch zu erhöhen, kann nach der Erfindung als weitere Variante vorgesehen sein, daß aus einem oder mehreren Zwischenreinigungszyklen der wäßrigen Phase Säure- und Wassermengen zusätzlich entnommen werden, wobei diese Mengen als Waschlösungen für Reinigungsstufen der organischen Phase verwendet werden.

Die Erfindung ist nachstehend anhand der Zeichnung beispielsweise näher erläutert. Diese zeigt in

Fig. 1 ein prinzipielles Flußdiagramm eines Zwischenreinigungszyklus der wäßrigen Phase,

Fig. 2 ein prinzipielles Flußdiagramm eines Gesamtprozesses nach der Erfindung und

Fig. 3 ein prinzipielles Flußdiagramm eines abgewandelten Ausführungsbeispiels nach der Erfindung.

Die in den Figuren wiedergegebenen Flußdiagramme weisen für die einzelnen Prozeßabläufe Stufensymbole auf, die als Rechtecke dargestellt sind und deren Funktionen durch Buchstaben angedeutet sind, wobei die Buchstaben in alphabetischer Reihenfolge folgendes bedeuten:

A = Ansetzen wäßriger Prozeßlösungen
Au = Auflösung der Brennelemente
D = destillative Trennung der wäßrigen Phase
E = Extraktion
R = Rückextraktion
T = Trennung U—Pu
V = Verdampfung der wäßrigen Phase
W = Wäsche der organischen Phase

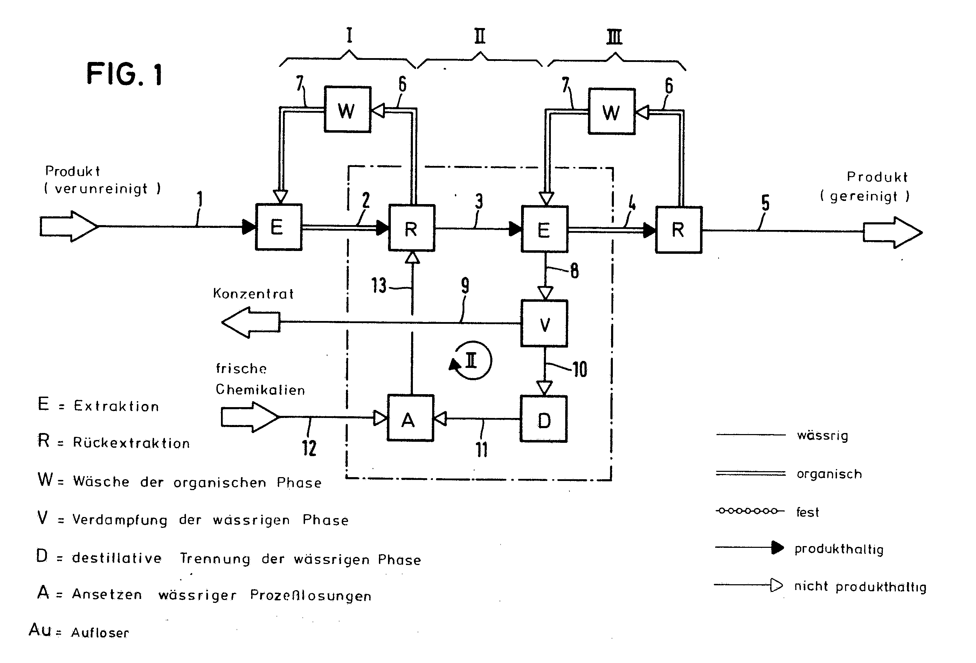

In Fig. 1 ist ein prinzipielles Flußdiagramm gezeigt, bei dem einem mit I bezeichneten Waschzyklus ein weiterer Waschzyklus II folgt, an den sich ein Waschzyklus III, der gleichwertig mit dem Waschzyklus I ist, anschließt. Das Produkt, beispielsweise Uran oder Plutonium oder ein Uran/Plutonium-Gemisch, tritt bei I in den dargestellten Prozeßteil ein. Es wird in der Extraktion E mit einem organischen Lösungsmittel versetzt und extrahiert, über den Weg 2 der Rückextraktion R zugeführt und von dort über den Weg 3 einer erneuten Extraktion E und Rückextraktion R über den Weg 4 unterworfen. Bei 5 verläßt das gereinigte Produkt den Prozeß. Es können sich weitere Extraktionszyklen anschließen, was aber in Fig. 1 nicht näher dargestellt ist. Die organische Phase wird von der Rückextraktion R über 6 einer Wäsche W unterzogen und über 7 erneut der Extraktion E zugeführt.

In Fig. 1 ist der Reinigungsprozeß der wäßrigen Phase strichpunktiert eingerahmt. Ein derartiger Reinigungskreislauf II ist zwischen den beiden Zyklen I und III vorgesehen. Die wäßrige Phase wird der Extraktion E über 8 entzogen und einer Verdampfung V zugeführt. Von dort kann bereits Konzentrat über 9 entnommen werden. Der Verdampfung V ist eine destillative Trennung der wäßrigen Phase D über 10 nachgeordnet, die ihrerseits über 11 dem Ansetzen wäßriger Prozeßlösungen A vorgeschaltet ist. Über 12 können hier frische Chemikalien zugeführt werden. Von diesem Prozeßabschnitt wird über 13 die wäßrige Phase der Rückextraktion R zugeordnet.

Diese Folge von Extraktionszyklen I bzw. III mit Zwischenreinigungszyklen II der wäßrigen Phase kann in unterschiedlicher Weise und Anordnung durchgeführt werden, wie dies aus den nachfolgenden Anwendungsbeispielen hervorgeht.

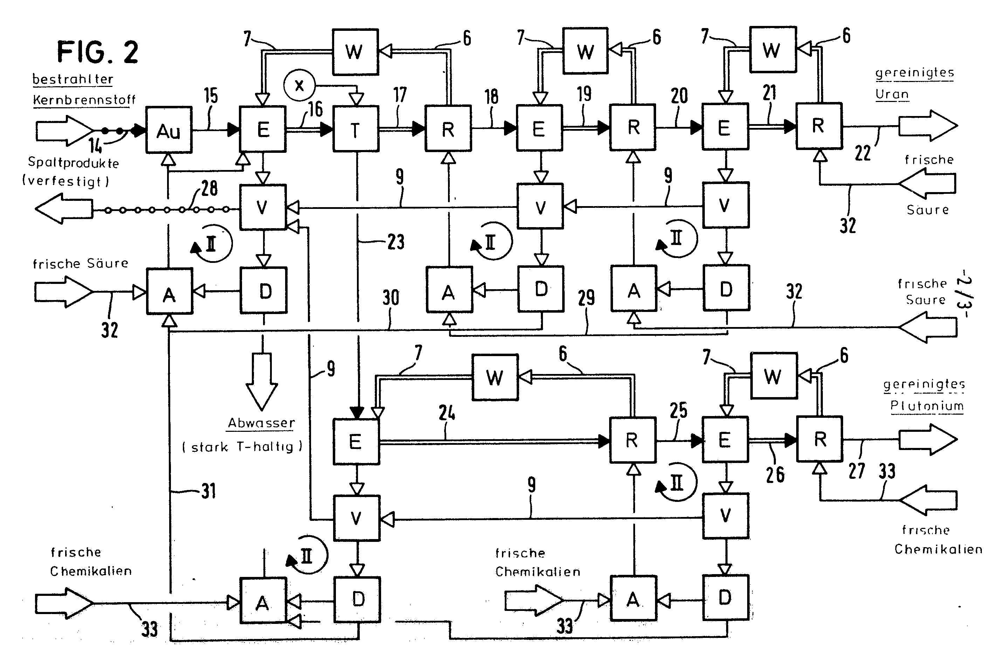

In Fig. 2 vereinfacht ein Prinzipflußdiagramm eines Gesamtprozesses nach der Erfindung dargestellt. Bei 14 tritt der bestrahlte, zu behandelnde Kernbrennstoff in den Prozeß ein und wird zunächst einer Auflösung Au unterworfen, anschließend über 15 der Extraktion E und über 16 noch als U/Pu-Gemisch einer Trennung T zugeführt. Der Urananteil wird in der dargestellten Folge über 17 einer Rückextraktion, über 18 der nächsten Extraktion und 19 der nächsten Rückextraktion sowie über 20 einer weiteren Extraktion und über 21 einer erneuten Rückextraktion unterworfen, um bei 22 den Prozeß als gereinigtes Uran zu verlassen.

Der Plutoniumanteil des Kernbrennstoffes verläßt über den Weg 23 die U/Pu-Trennung T und wird einer Extraktion E zugeführt, von dort über 24 einer Rückextraktion sowie über 25 einer weiteren Extraktion und 26 einer weiteren Rückextraktion unterworfen, um bei 27 den Prozeß als gereinigtes Plutonium zu verlassen.

Den einzelnen Extraktions- und Rückextraktionsteilen sind für die organische Phase, wie in Fig. 1 bereits beschrieben, im Gegenstrom Lösungsmittelwäschen W zugeordnet, wobei die entsprechenden Wege, wie in Fig. 1, jeweils mit 6 bzw. 7 bezeichnet sind.

Für die Erfindung wichtig sind die Zwischenreinigungszyklen II der wäßrigen Phasen, die entsprechende Bezeichnung mit II ist jeweils innerhalb eines solchen Zyklus in einem Kreispfeil eingezeichnet. Aus Übersichtsgründen wird auf eine Bezeichnung der einzelnen Wege der Zwischenreinigungszyklen verzichtet, die den in Fig. 1 prinzipiell dargestellten Wegen entspricht.

Wie sich aus Fig. 2 ergibt, wird das Konzentrat aus einem Verdampfer über den Weg 9 dem Verdampfer dem nächsthöher verunreinigten Zyklus zugeführt, um schließlich bei 28 als Spaltprodukt den Prozeß zu verlassen, ggf. verfestigt, beispielsweise in Glas eingeschmolzen od. dgl. Auch ist in Fig. 2 die Möglichkeit dargestellt, Prozeßprodukte aus der Destillation D jeweils der nächsthöher verunreinigten Stufe zum Ansatz wäßriger Prozeßlösungen zuzuführen, was mit dem Weg 29 bzw. 30/31 angedeutet ist.

Der Einsatz frischer Säuren ist mit 32 bezeichnet, während der Einsatz frischer Chemikalien mit 33, insbesondere im Plutonium-Reinigungsabschnitt, bezeichnet ist.

In Fig. 2 ist mit x im Kreis aus zeichnerischen Gründen der geschlossene Kreislauf eines Zwischenreinigungszyklus II an der U/Pu-Trennung unterbrochen. Im Prozeß stellt x/x eine geschlossene Führung dar.

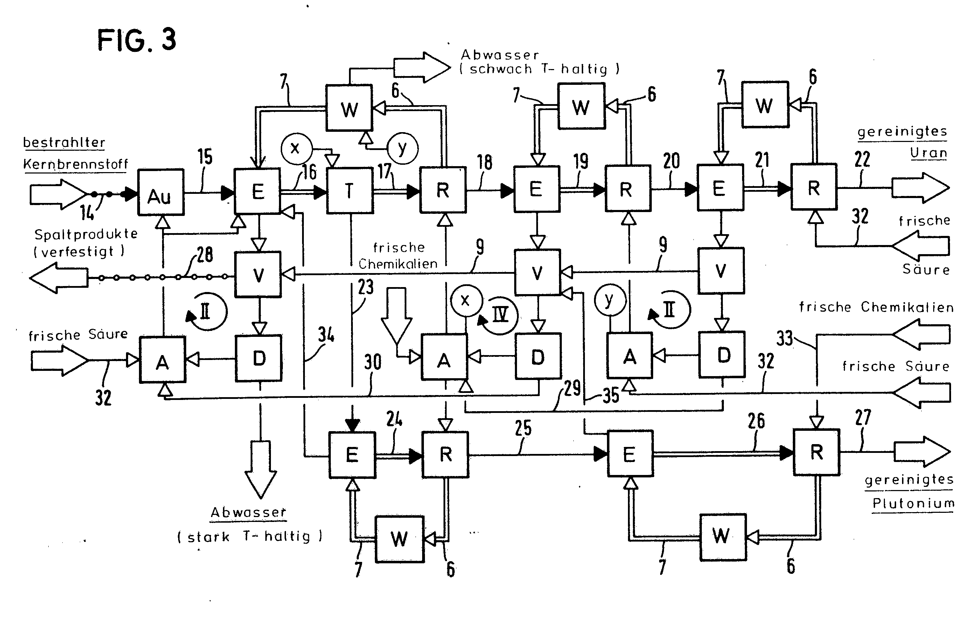

Eine weitere vorteilhafte Abwandlung der Erfindung ist im prinzipiellen Flußdiagramm nach Fig. 3 dargestellt. Aus Fig. 3 wird bei Beibehaltung aller sonstigen Bezeichnungen deutlich, daß der in der Figur links dargestellte erste Zwischenreinigungszyklus II gleichzeitig als Zwischenreinigungszyklus des ersten Extraktionszyklus des Pu-Reinigungsastes nach der Trennung über den Verbindungsweg 34 dient.

Der mittlere Zwischenreinigungszyklus, aus besseren Darstellungsgründen als IV bezeichnet, d. h. der Zwischenreinigungszyklus, der zwischen den beiden ersten Extraktionszyklen, und zwar des die Trennung überbrückenden Zyklus einerseits und des ersten Extraktionszyklus des Uranastes zwischengeschaltet ist, dient gleichzeitig als Zwischenreinigungszyklus des letzten Extraktionszyklus des Plutoniumastes, und zwar über die Verbindung 35.

Aus zeichnerischen Gründen sind wiederum Verbindungswege unterbrochen dargestellt. So ist eine x-x-Verbindung, wie auch eine y-y-Verbindung in der dargestellten Weise vorhanden.

Wie sich aus der vorstehenden Beschreibung ergibt, liegt die Effektivität der erfindungsgemäßen Verfahrensweise darin, mehrere Zwischenreinigungszyklen II der wäßrigen Phase vorzusehen. Geht man gedanklich von einem relativen Tritiumgehalt von »1« aus, so verläßt die Hälfte dieses Tritiumgehaltes den Prozeß in Form von der Entlagerung zuzuführenden Hülsen einerseits und andererseits, wie dargestellt, als verfestigte Spaltprodukte. Die relative Tritiummenge, die beispielsweise noch am Ende des Uranastes vorhanden ist, kann mit dem Verfahren auf das $10^{-6}$fache gesenkt werden.

Natürlich sind die beschriebenen Ausführungsbeispiele noch in vielfacher Hinsicht abzuändern, ohne den Grundgedanken der Erfindung zu verlassen. So ist beispielsweise die Erfindung nicht auf die dargestellte Anzahl von Extraktionszyklen einerseits und Zwischenreinigungszyklen der wäßrigen Phase andererseits beschränkt, ebenso wie nicht darauf, daß die beiden Produkte schwerpunktmäßig nach ihrer Trennung den entsprechenden Reinigungszyklen unterworfen werden, in gleicher Weise kann dies vor der Trennung bereits mehrfach erfolgt sein. Je nach Art der Optimierung der einzelnen Prozesse können unterschiedliche Mengen an frischen Säuren bzw. Chemikalien den einzelnen Stufen zugeführt oder auch von diesen unterschiedliche Mengen an Tritium od. dgl. abgezogen werden.

## Patentansprüche

1. Verfahren zur Reinigung der bei der Wiederaufbereitung von bestrahlten Kernbrennstoffen nach dem Purex-Prozeß vorhandenen Produktlösungen von Tritium mit einer Mehrzahl von in Reihe geschalteten Extraktionszyklen zur Extraktion des Urans und/oder Plutoniums mit einem organischen Lösungsmittel, dadurch gekennzeichnet, daß zur Extraktion des Tritiums eine Mehrzahl von in Reihe geschalteten Zwischenreinigungszyklen der wäßrigen Phase vorgesehen sind, wobei die aus einem Zwischenreinigungszyklus abgegebene Menge an Tritium in die nächsthöher verunreinigte Stufe der Reihe von Zwischenreinigungszyklen eingeschleust wird.

2. Verfahren nach Anspruch 1, dadurch gekennzeichnet, daß jeweils einem Extraktionszyklus ein Zwischenreinigungszyklus der wäßrigen Phase nachgeordnet ist.

3. Verfahren nach einem der Ansprüche 1 oder 2, dadurch gekennzeichnet, daß die Zwischenreinigungszyklenfolge nach der Pu/U-Trennung getrennt für jedes Produkt erfolgt.

4. Verfahren nach Anspruch 3, dadurch gekennzeichnet, daß die Zwischenreinigungszyklen der wäßrigen Phase teilweise zusammengefaßt werden.

5. Verfahren nach einem der vorangehenden Ansprüche, dadurch gekennzeichnet, daß vorbestimmte Mengen Tritium aus jedem Zwischenreinigungszyklus entnommen werden.

6. Verfahren nach den Ansprüchen 1—5, dadurch gekennzeichnet, daß dem letzten, saubersten Zwischenreinigungszyklus frische Mengen Chemikalien zum Ausgleich der Mengenbilanzen zugeführt werden.

7. Verfahren nach einem der vorangehenden Ansprüche, dadurch gekennzeichnet, daß zusätzlich jedem Zwischenreinigungszyklus geringfügige Mengen an frischer Salpetersäure und/oder Wasser zum Ausgleich der Mengenbilanzen zugeführt werden.

8. Verfahren nach einem der vorangehenden Ansprüche, dadurch gekennzeichnet, daß der Raffinatstrom (34) der Plutonium-Extraktionsstufe, die der Uran/Plutonium-Trennstufe folgt, direkt als letzter Waschstrom in die Uran- und Plutonium-Extraktionsstufe zugeführt wird.

9. Verfahren nach einem der vorangehenden Ansprüche, dadurch gekennzeichnet, daß aus einem oder mehreren Zwischenreinigungszyklen der wäßrigen Phase Säure- und Wassermengen zusätzlich entnommen werden, wobei diese Mengen als Waschlösungen für Reinigungsstufen der organischen Phasen verwendet werden.

## Claims

1. A method of purifying the product solutions which are present in the reprocesssing of irradiated nuclear fuels, using the purex process, of tritium, with a plurality of series-connected extraction cycles for extraction of the uranium and/or plutonium with an organic solvent, characterised in that a plurality of series-connected intermediate purification cycles in respect of the aqueous phase are provided for extraction of the tritium, wherein the amount of tritium discharged from an intermediate purification cycle is charged into the next more highly contaminated stage in the series of intermediate purification cycles.

2. A method according to claim 1 characterised in that a respective aqueous-phase intermediate purification cycle follows each extraction cycle.

3. A method according to one of claims 1 or 2 characterised in that the sequence of intermediate purification cycles is performed separately for each product after the Pu/U separation operation.

4. A method according to claim 3 characterised in that the aqueous-phase intermediate purification cycles are partially combined.

5. A method according to one of the preceding claims characterised in that predetermined amounts of tritium are taken from each intermediate purification cycle.

6. A method according to claims 1 to 5 characterised in that fresh quantities of chemicals are added to the last, cleanest intermediate purification cycle, to balance the quantitative balance sheets.

7. A method according to one of the preceding claims characterised in that small quantities of fresh nitric acid and/or water are additionally added to each intermediate purification cycle, to balance the quantitative balance sheets.

8. A method according to one of the preceding claims characterised in that the raffinate flow (34) of the plutonium extraction stage, which follows the uranium/plutonium separation stage, is fed directly as a last washing flow into the uranium and plutonium extraction stage.

9. A method according to one of the preceding claims characterised in that quantities of acid and water are additionally removed from one or more aqueous-phase intermediate purification cycles, said quantities being used as washing solutions for purification stages in respect of the organic phase.

## Revendications

1. Procédé pour débarrasser du tritium les solutions de produits obtenues à la régénération des combustibles nucléaires irradiés par le procédé Purex par de multiples cycles d'extraction réalisés en série pour l'extraction de l'uranium et/ou du plutonium à l'aide d'un solvant organique, caractérisé en ce que, pour l'extraction du tritium, on prévoit de multiples cycles d'épuration intermédiaire de la phase aqueuse réalisés en série, la quantité de tritium évacuée d'un cycle d'épuration intermédiaire étant envoyée dans le stade correspondant à une impureté immédiatement supérieure de la série des cycles d'épuration intermédiaire.

2. Procédé selon la revendication 1, caractérisé en ce que chaque cycle d'extraction est suivi d'un cycle d'épuration intermédiaire de la phase aqueuse.

3. Procédé selon l'une des revendications 1 ou 2, caractérisé en ce que la suite des cycles d'épuration intermédiaire est réalisée séparément pour chaque produit après la séparation Pu/U.

4. Procédé selon la revendication 3, caractérisé en ce que les cycles d'épuration intermédiaire de la phase aqueuse sont partiellement rassemblés.

5. Procédé selon l'une des revendications précédentes, caractérisé en ce que l'on prélève des quantités prédéterminées de tritium à partir de chacun des cycles d'épuration intermédiaire.

6. Procédé selon les revendications 1 à 5, caractérisé en ce qu'on envoie des produits chimiques frais dans le dernier cycle d'épuration intermédiaire correspondant à la plus grande pureté pour en compenser les bilans de matières.

7. Procédé selon l'une des revendications précédentes, caractérisé en ce que l'on introduit en outre dans chaque cycle d'épuration intermédiaire des petites quantités d'acide nitrique frais et/ou d'eau pour compenser les bilans de matières.

8. Procédé selon l'une des revendications précédentes, caractérisé en ce que le courant de raffinat (34) du stade d'extraction du plutonium qui suit le stade de séparation uranium/plutonium est envoyé directement, en tant que dernier courant de lavage, dans le stade d'extraction de l'uranium et du plutonium.

9. Procédé selon l'une des revendications précédentes, caractérisé en ce que l'on prélève en outre dans un ou plusieurs des cycles d'épuration intermédiaire de la phase aqueuse, des quantités d'acide et d'eau, ces quantités étant utilisées comme solutions de lavage pour les stades d'épuration des phases organiques.

# FIG. 1

E = Extraktion

R = Rückextraktion

W = Wäsche der organischen Phase

V = Verdampfung der wässrigen Phase

D = destillative Trennung der wässrigen Phase

A = Ansetzen wässriger Prozeßlosungen

Au = Aufloser

Produkt ( verunreinigt )

Produkt ( gereinigt )

Konzentrat

frische Chemikalien

——— wässrig

═══ organisch

-o-o-o-o-o-o- fest

——▶ produkthaltig

——▷ nicht produkthaltig

0 023 530

FIG. 2

- 3/3 -

# FIG. 3

Abwasser
( schwach T- haltig )

bestrahlter
Kernbrennstoff

gereinigtes
Uran

Spaltprodukte
(verfestigt )

frische
Chemikalien

frische
Säure

frische Säure

frische Chemikalien

frische Säure

Abwasser
( stark T- haltig )

gereinigtes
Plutonium